# EUROPEAN PATENT APPLICATION

(11) **EP 1 589 131 A1**
(43) Date of publication of application: **26.10.2005**
(21) Application number: 04076211.4
(22) Date of filing: 21.04.2004
(51) Int. Cl.: D01F 9/127, B01J 32/00

(54) **Carbon nanofibre composites, preparation and use**

(71) Applicant: Stichting voor de Technische Wetenschappen, 3527 JP Utrecht (NL)
(72) Inventor: van der Lee, Martijn Klaas, 5345 LT Oss (NL); de Jong, Krijn Pieter, 3991 BK Houten (NL); van Dillen, Adrianus Jacobus, 4102 AB Culemborg (NL); Bitter, Johannes Hendrik, 3984 NN Odijk (NL)
(74) Representative: Winckels, Johannes Hubertus F.

(57) **Abstract**

The invention is directed to arbon nanofibre composite having a bulk density of at least 800kg/m³, obtainable by the process of growing carbon nanofibres on the surface of a supported carbon fibre producing metal catalyst, such as a catalyst based on nickel, cobalt, iron and ruthenium or combinations and/or alloys thereof, by decomposition of a hydrocarbon, for a sufficient period of time to produce the required bulk density, optionally followed by removal of the growth catalyst, to their production and use as catalyst support.

## Description

Carbon nanofibers (CNF) and composites containing them, have gained increasing attention in the last few years due to their high strength, chemical purity and chemical inertness which features make them ideally suitable for use as a catalyst support.

The relevance of CNF materials is clearly envisioned by their application as a support in various catalytic processes, such as methanation of synthesis gas and selective hydrogenations. The catalytic performance of the carbon (graphite, activated carbon) supported catalysts can be tuned by a change of the features of the support, like the amount of oxygen-containing surface groups, the accessibility of the support, and the degree of carbon ordering. A similar influence of the support exists on the performance of a metal/CNF catalyst.

Two important pre-requisites have to be fulfilled for a good catalyst support material: a high bulk density and a high porosity. High support densities result in a more efficient use of the reactor volume and are therefore economically favorable above low density supports. On the other hand, the porosity i.e., accessibility is important in order to avoid mass transport limitations.

The properties of CNF potentially surpass those of conventional oxidic supports like a.o., silica and alumina. Carbon nanofibers are chemically inert, pure and mechanically strong and thus suitable as catalytic support material. The CNF-bodies consist of entangled individual carbon nanofibers, which are formed during the catalytic growth via decomposition of carbon containing gases, such as CO/H₂, CH₄, C₂H₄ and the like over growth catalysts based on metals, such as those based on nickel, cobalt, iron, ruthenium, combinations and/or alloys thereof and the like. Suitable supports are silica, alumina, magnesia, carbon, carbon fibers and the like.

The two most encountered forms of CNF are the fishbone and the parallel type (also called multiwalled carbon nanotubes). In the fishbone type fibers the graphite planes are oriented at an angle to the central axis, thus exposing graphite edge sites. If the graphite planes are oriented parallel to the central axis, like in the parallel type of CNF, only basal graphitic planes are exposed.

Generally CNF or CNF-composites have a low bulk density, due to the internal structure, which is generated during the growth thereof. This bulk density is generally lower than 400 kg/m³, although there is one instance where a bulk density of 760 kg/m³ has been reported (Reshetenko etal, Catalytic filamentous carbon, Structural and textural properties, Carbon 41 (2003) 1605-1615). As indicated above, high bulk densities are a prerequisite for a good support material. In US patent specification No. 6,099,965 a description has been given of carbon nanofibres that have been compacted or otherwise treated after production to provide for a bulk density of greater than 800, preferably greater than 1000 kg/m³. The fibres as produced, without having undergone the densifying treatment have low densities, in the order of magnitude of 100 to 400 kg/m³.

In general a support for catalysts, which can be used in a fluidized bed process, have bulk densities in the range of 600 to 1500 kg/m³]. When an active phase is deposited on to the support for example in the production of formalin from methanol, bulk densities of the catalyst can raise to about 1600 kg/m³. Another example given in literature is the desulfurization in a fluidized bed reactor using a catalyst with a bulk density of 1240 kg/m³.

The present invention is based on the finding of the present inventors, that by carefull selection of the production conditions, it is possible to produce carbon nanofibre composites, i.e. bodies of CNF's, that have a bulk density, as defined herein, of at least 800 kg/m³, more in particular between 800 and 1250 kg/m³.

Accordingly, in a first embodiment, the invention is directed to carbon nanofibre composite having a bulk density of at least 800 kg/m³, obtainable by the process of growing carbon nanofibres on the surface of a supported carbon fibre producing metal catalyst, such as a nickel, cobalt, iron and ruthenium catalyst, by decomposition of a hydrocarbon, for a sufficient period of time to produce the required bulk density, optionally followed by removal of the growth catalyst.

In a further embodiment the invention is directed to a carbon nanofibre composite having a bulk density of at least 800 kg/m³ directly as produced.

These CNF composites are extremely suitable as catalyst support because of their high bulk density, so that a high reactor loading is possible and that they are easy to separate from a reaction mixture.

Because CNF consist of carbon, a carbon-containing gas is needed for the synthesis of these materials. The production of reactive carbon intermediates from this carbon-containing gas is a crucial step in the synthesis procedure. This can be achieved by activation of graphite by laser vaporization, electric arc-discharge or by the dissociation of a carbon containing gas on the surface of a metal catalyst like Ni, Fe or Co, or combinations and/or alloys thereof. The latter route, which is called catalytic synthesis, is a technique with which one can produce very pure CNF in large quantities, while tuning of physico-chemical properties like surface structure, diameter and morphology is possible.

However, the mechanism of preparation of uniform CNF with defined properties, like diameter and macroscopic porosity, is not fully understood. The most important parameters which influence these properties are the nature and size/uniformity of the metallic catalyst particles and the nature of the carbon-containing gas, although effects of promotors has been described as well. Variations in the choice of the metal and the growth temperature can alter the ordering of the graphite planes from parallel to fishbone. Parallel CNF can be grown, especially using CO, from iron and cobalt particles as well as from nickel at elevated temperatures. Fishbone fibers are mainly obtained when using nickel and nickel―iron alloy catalysts with methane as the carbon-containing gas.

As stated, the dissociation of a carbon-containing gas on a metal surface is a key step in the production of catalytically grown CNF. It is noted that the dissociation rate of carbon-containing gases is among other things dependent on the detailed surface structure of the metal thus influencing the CNF growth process. For example, Ni(1 1 0) and (1 0 0) surfaces are much more active for methane dissociation than the Ni(1 1 1) surface. The particle size of the metal can affect the characteristics of the CNF as well.

The diameter of the nanofibers is controlled by the size of the metal particles from which the nanofibers start to grow. This allows us to tune the diameter of the CNF. Previous studies have revealed that CNF can be produced with surface areas of up to 300 m²/g, which is comparable to the surface areas commonly reported for selective hydrogenation catalysts. Due to the diversity of the applied reaction conditions in the above-mentioned studies, it is not possible to directly compare the obtained results with respect to the tuning of the CNF.

In 'Impact of the structure and reactivity of nickel particles on the catalytic growth of carbon nanofibers', M.L. Toebes et al, Catalysis Today 76 (2002) 33-42, the results of a study on the catalytic decomposition of several carbon-containing gases (CH₄, CO/H₂ and C₂H₄/H₂) on a silicasupported nickel catalyst and on an unsupported nickel catalyst have been presented. It turns out that the combination of the nickel particle size and the nature of the carbon-containing gas significantly affects the CNF growth process. It is demonstrated that small supported nickel particles need a carbon-containing gas with a relatively low reactivity, like CH₄ or CO/H₂, to produce CNF. The resulting fishbone CNF have a uniform and small diameter. However, the large unsupported nickel particles only produce CNF using a reactive carbon-containing gas, like C₂H₄/H₂. The CNF thus obtained show a variety of morphologies with a large range of diameters.

The key feature, bulk density (also called packing density) of the CNF-composite, is determined using the method described in ASTM D1895B, which method comprises filling a container with a known volume (in this case 0.086 ml), tapping the container to densify the fibresand measuring the weight thereof a number of times. From these data the bulk density is calculated.

The invention is further directed to a method of preparing these carbon nanofibre composites, said method comprising growing carbon nanofibres on the surface of a supported nickel catalyst by decomposition of a hydrocarbon, for a sufficient period of time to produce the required bulk density, optionally followed by removal of the supported nickel catalyst.

The nickel catalyst may be applied on any suitable support, in various amounts, provided that the required bulk density is obtained. Suitable supports are silica, alumina, silica-alumina, magnesia, carbon, carbon fibers and the like. The loading of the support with metal generally ranges from 1 wt.% up to very high amounts, such as 99 wt.%. However, it has been found that in order to produce a high bulk density of the CNF, it is preferred to use a nickel catalyst on a silica containing support, the amount of nickel in the reduced catalyst being at least 10 wt.% based on the weight of the catalyst, preferably at least 15 wt.%.

Conventional method may be used for producing the catalyst to be used for growing the CNF. It is preferred to produce the Ni/SiO₂ catalyst by homogeneous deposition precipitation, as described in A.J. van Dillen, J.W. Geus, L.A.M. Hermans and J. van der Meijden, *Proc. 6th Int. Congr. Catal.,* 1977, **2**, 677; L.A.M. Hermans and J.W. Geus, *Stud. Surf. Sci. Catal.,* 1979, **3**, 113.

The carbon containing gas in the production of the CNF can be any suitable carbon containing gas, such as has been used in the art. Examples are CO, CO/H₂ mixtures, CH₄, C₂H₄ and other gases such as the lower alkanes, alkylenes, alkyns and the like. Preferred is the use of methane or CO/H₂. Optionally the gas may be diluted with an inert gas, such as nitrogen. Generally the carbon content of the gas (on weight basis) is at least 0.34 g/l.

The gas is passed over the catalyst in a suitable reactor for producing the CNF, such as a fluid bed reactor, a fixed bedreactor, riser reactor. The temperature in the reactor is kept at a level which is suitable for producing the fibres. The temperature is dependent on the nature of the catalyst and the nature of the carbon containing gas. A general lower limit of the temperature is 400°C. For gases such as methane and CO/H₂ the temperature is generally between 400°C and 925°C. A general upper limit for the temperature is 1250°C.

The reaction time has an influence on the macroscopic structure and the bulk density of the CNF-composites. Longer reaction times result in higher bulk density. In general a reaction time of at least 5 hours is preferred, More preferred is a reaction time of at least 8 hours. The temperature and nickel loading of the catalyst influence the reaction time that is required for obtaining the minimal bulk density of the invention.

After the CNF-composites have been produced, they may be used as such for various applications, such as polymer additive, hydrogen storage, micro electronics, fixation of homogeneous catalysts or enzymes, more in particular as catalyst support. It is, however, also possible to remove the catalyst support from the CNF, by dissolving the support in a suitable material (acid or base). A support which dissolves in a base, for exmple SiO₂, is removed by treating the CNF at reflux temperature in 1M KOH for 2 hours. Acid soluble supports like γ-Al₂O₃ can be removed by a similar treatment in 1M HCl (however 5-10% of the Al₂O₃ is left in the final product since it does not dissolve).

After the production of the CNF's it is further possible to modify them, for example to remove the metal even further and/or to introduce oxygen containing groups on the surface of the CNF's, to produce oxidised CNF's. These treatments generally include the use of HCl and/or H₂SO₄/HNO₃ (in varying ratio's).

The invention is also directed to the use of the CNF-composites having a bulk density of at least 800 kg/m³, as catalyst or catalyst support. The composites may be used as such for reactions that are catalysed by carbon, optionally having received a surface modification by oxidation. It is, however, preferred to apply a suitable catalytically active material on the surface of the CNF. Suitable catalytically active materials can be the metallic or oxidic base metals, such as nickel, copper, tungsten, iron, manganese, zinc, vanadium, chromium, molybdenum, rhodium, iridium, ruthenium and the like, as well as combinations thereof. It is also possible to use the CNF as support for precious metal catalysts, such as those based on platinum, palladium, gold or silver and combinations thereof. It is also possible to anchor organometallic, or metal-phospine catalysts on the surface of the CNF.

When preparing a catalyst with CNF as the support it is preferred to use an oxidised CNF, as this improves the stability against sintering of the final catalyst, more in particular of a nickel catalyst.

The catalytic material can be applied to the CNF-support in conventional manners, such as incipient wetness or homogeneous deposition precipitation. For metals it is preferred to use homogeneous deposition precipitation, such as described in Synthesis of highly loaded highly dispersed nickel on carbon nanofibers by homogeneous deposition-precipitation Bitter, J.H., M.K. van der Lee, A.G.T. Slotboom, A.J. van Dillen and K.P. de Jong, Cat. Lett. 89 (2003) 139-142.

Suitable reactions both in the liquid and gasphase in which the CNF supported catalysts may be used are hydrogenation reactions, dehydrogenation reaction, hydro-desulfurisation reaction, methanation reactions, low temperature oxidation reactions and the like.

### EXAMPLE

Carbon nanofibers were grown via catalytic decomposition of CO in the presence of hydrogen on two Ni/SiO₂ growth catalysts (5 and 20wt% Ni). The Ni/SiO₂ catalysts were prepared via homogeneous deposition precipitation using silica (Degussa, Aerosil 200), nickel nitrate (Acros), and urea (Acros). After deposition ofthe catalyst precursor was filtered, dried at 120 °C ovemight. After drying a sieve fraction of 425-850 µm was calcined in static air at 600°C for 3 hours (heating rate 5 °C/min). Next, about 0.5 gram Ni/SiO₂ was reduced in situ in 20 vol% H₂ in N₂ for 2 hours at 700°C. After cooling to 550°C, a gas mixture of 20 vol% CO and 7.5 vol% H₂ in N₂ was passed through the catalyst. After the growth, the reactor was cooled to room temperature, flushed with nitrogen and the resulting product was collected.

Silica from the growth catalyst was removed from the grown CNF-bodies by refluxing the product in 1M KOH for 2 hours. After subsequent washing with de-ionized water and drying overnight at 120°C the material was treated in 1M HCl at reflux temperature and again washed with de-ionized water and dried overnight at 120°C the bulk density and BET pore volumes and surface areas were measured. To measure the bulk density, the mass of a fixed volume with stacked CNF-bodies ware measured using the method of ASTM D1895B.

SEM results show that the grown CNF-bodies are enlarged replicates of the originating Ni/SiO₂ growth catalyst particles. The diameter of the final bodies is about twice or tree times the diameter of the growth catalyst and leads thus at least to a 10-fold enlargement of the body volume.

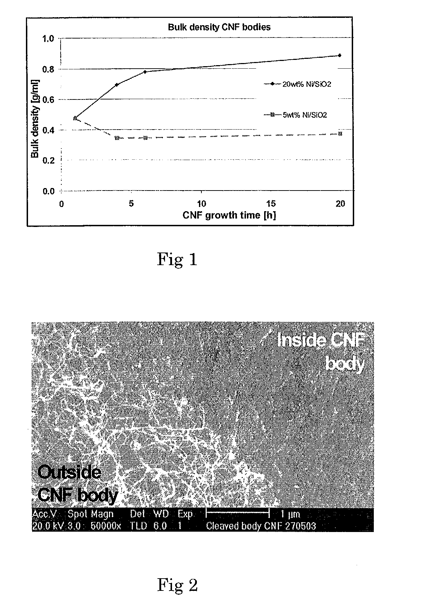

Figure 1 shows the relation between the bulk densities of the grown CNF-bodies with increasing growth time using the 5 and 20 wt% nickel silica growth catalysts. It can be seen that the growth time and nickel loading of the nickel-silica catalyst are key factors, which govern the ultimate bulk density of CNF-bodies. The 20 wt% Ni/SiO₂ catalysts yield strong CNF-bodies with a high bulk-density. In this highly loaded growth catalyst the nickel particles with a diameter of about 5 nm are close to each other leading to formation of a large number of fibers with a diameter of 25 nm. These fibers easily entangle due to their close proximity. The fibers on the external edge of a skein have a more open CNF structure due to more free space, see figure 2.

Using the high density CNF-composite described above, having a bulk density of 900 kg/m³, an nickel on CNF catalyst was prepared using homogeneous deposition precipitation.

For HDP 0.8 gram of nickel nitrate hexahydrate was dissolved in 200 ml de-ionized water and 1.5 grams of the oxidized CNF was added. When needed the solution was brought to pH 2 with a few drops of HNO₃. While stirring, the suspension was brought at 90 °C and kept at that temperature during the precipitation. An aqueous solution (10 ml) containing 0.6 g urea was added at the final temperature. After deposition for 18 hours and cooling to room temperature the loaded carbon nanofibers were thoroughly washed, dried at 120°C and subsequently reduced in a 20% hydrogen in argon flow at 500°C for 1 hour at 1 bar. After cooling to room temperature and subsequent exposure to air, the Ni/CNF's were stored for further use. In this way 10 wt% nickel on carbon nanofiber samples were prepared. The nickel loading of these systems were established by thermogravimetic analysis (TGA). The same procedure but with a higher concentration of Ni in the solution was applied with the aim of preparing 50 wt% nickel on carbon nanofibers.

## Claims

1. Carbon nanofibre composite having a bulk density of at least 800kg/m³, obtainable by the process of growing carbon nanofibres on the surface of a supported carbon fibre producing metal catalyst, such as a catalyst based on nickel, cobalt, iron and ruthenium or combinations and/or alloys thereof, by decomposition of a hydrocarbon, for a sufficient period of time to produce the required bulk density, optionally followed by removal of the growth catalyst.

2. Carbon nanofibre composite according to claim 1, having a bulk density of 800 to 1250 kg/m³.

3. Carbon nanofibre composite according to claim 1 or 2, comprising bodies of entangled fibres, optionally containing the said supported catalytic material.

4. Method of preparing a carbon nanofibre composite according to any one of the claims 1-3, said method comprising growing carbon nanofibres on the surface of a supported carbon fibre producing metal catalyst, such as a nickel, cobalt, iron and ruthenium catalyst, by decomposition of a hydrocarbon, for a sufficient period of time to produce the required bulk density, optionally followed by removal of the growth catalyst.

5. Method according to claim 4, comprising using a nickel catalyst on a silica containing support, the amount of nickel in the reduced catalyst being at least 10 wt.% based on the weight of the catalyst, preferably at least 15 wt.%.

6. Method according to claim 4 or 5, wherein the hydrocarbon is methane and the reaction temperature is between 400 and 950 °C.

7. Method according to claim 6, wherein the reaction time is at least 5 h., preferably at least 10 h.

8. Carbon nanofibre composite having a bulk density of at least 800kg/m³ as produced by growing carbon nanofibres on the surface of a supported carbon fibre producing metal catalyst.

9. Catalyst or catalyst precursor comprising a support material and at least one catalytically active material or a precursor therefor, said support material being a carbon nanofibre composite according to any one of the claims 1-3 and 8.

10. Catalyst according to claim 9, said catalytically active material having been selected from the group of noble metals, rhodium, nickel, iron, copper or combinations thereof..

11. Catalyst according to claim 9 or 10, said catalytically active material having been applied to the carbon nanofibre composite by homogeneous deposition precipitation.

12. Use of a carbon nanofibre composite according to any one of the claims 1-3 and 8, as catalyst support.

13. Process for performing at least one chemical reaction in the presence of a supported catalyst, said supported catalyst comprising a carbon nanofibre support according to any one of the claims 1-3 and 8.

14. Process according to claim 13, wherein the chemical reaction is selected from the group of hydrogenation reactions, dehydrogenation reactions, methanation reactions, low temperature oxidation reactions.
